# EUROPEAN PATENT APPLICATION

(11) **EP 2 682 934 A1**
(43) Date of publication of application: **08.01.2014**
(21) Application number: 13168067.0
(22) Date of filing: 16.05.2013
(51) Int. Cl.: G09G 3/00, G09G 5/00

(54) **Image processing apparatus and control method thereof**

(30) Priority: 04.07.2012 KR 20120072632
(71) Applicant: Samsung Electronics Co., Ltd, Gyeonggi-do 443-742 (KR)
(72) Inventor: Lee, Sang-eun, Seoul (KR); Choe, Ju-hyun, Gyeonggi-do (KR); Kim, Eun-young, Seoul (KR); Kim, Hyun-ho, Seoul (KR)
(74) Representative: Taor, Simon Edward William

(57) **Abstract**

An image processing apparatus including: a signal reception unit including a connector that is configured to connect to a plug of an external device and includes a first terminal and a second terminal, the signal reception unit being configured to receive a signal from the external device through the plug connected to the connector; a signal processor that processes the signal received by the signal reception unit according to a preset process; a storage that stores a test signal; and a controller that transmits the test signal stored in the storage to the first terminal when the first terminal and the second terminal are electrically connected to each other, and determines a signal transmission state of the connector to the signal processor based on a change in signal characteristics of the test signal fed back through the second terminal.

## Description

Apparatuses and methods consistent with the exemplary embodiments relate to an image processing apparatus, which is connected to an external device and processes various signals received from the external device, and a control method thereof, more particularly to an image processing apparatus having an improved configuration for inspecting a state of a connector connected with a plug of an external device, and a control method thereof.

An image processing apparatus processes an image signal received from an external source in various methods to display an image. The image processing apparatus may not include a display panel or may include its own display panel. An image processing apparatus without a display panel outputs a processed image signal to a display apparatus so that the image signal is displayed as an image on the display apparatus, which is for example a set-top box. An image processing apparatus with a display panel displays a processed image signal as an image on its own display panel, which is, for example, a television (TV) or a monitor.

An image processing apparatus may include an embedded image processing board which processes not only an image signal but various characteristics of signals, and a connector or jack provided for connection to various external devices via a cable. A wire plug electrically connected to an external device is connected with a connector of the image processing apparatus, and accordingly a signal from the external device is transmitted to the image processing board in the image processing apparatus. The image processing board processes the signal received through the connector.

However, when signal transmission between the external device and the image processing apparatus fails, it may be difficult to detect and inspect a cause of the signal transmission failure among components electrically connecting the device and the apparatus. For example, signal transmission failure may be due to problems in the external device, a wire plug connected to the external device, a connector in the image processing apparatus, or a wire condition between the connector and the image processing board. In particular, it is difficult for an ordinary user who does not have knowledge about an internal structure of the image processing apparatus and is not equipped with an inspection device to determine a signal transmission state in the image processing apparatus. Thus, there is a need for a configuration for easily determining a signal transmission state in the image processing apparatus.

According to an aspect of an exemplary embodiment, there is provided an image processing apparatus including: a signal reception unit including a connector that is configured to connect to a plug of an external device and includes a first terminal and a second terminal, the connector being configured to receive a signal from the external device through the plug connected to the connector; a signal processor that processes the signal received by the signal reception unit according to a preset process; a storage that stores a test signal; and a controller that transmits the test signal stored in the storage to the first terminal when the first terminal and the second terminal are electrically connected to each other, and that determines a signal transmission state of the connector to the signal processor based on a change in signal characteristics of the test signal fed back through the second terminal.

The controller may transmit a determination result of the signal transmission state of the test signal to be displayed on a display unit.

The image processing apparatus may further include a display unit.

The image processing apparatus may be connected to a display apparatus including the display unit, and the controller may transmit the determination result of the signal transmission state of the test signal to the display apparatus.

The controller may compare the signal characteristic of the test signal stored in the storage and the fed back test signal, and based on a result of the comparison, may determine that the signal transmission state is normal when a level difference is within a preset range, and may determine that the signal transmission state is abnormal when the level difference is out of the preset range.

The signal characteristics may include at least one of a voltage, a frequency, synchronization timing, a brightness level, and a color level.

The first terminal and the second terminal may be configured to be electrically isolated from each other when the plug is connected to the connector, and may be configured to be electrically connected to each other when the plug is not connected to the connector, and the controller may determine the signal transmission state of the connector when the plug is not connected to the connector.

The test signal may include an analog signal, and the controller may determine the signal transmission state of the connector based on a change in at least one of a voltage and a frequency of the fed back test signal.

The test signal may include an audio signal, and the controller may determine the signal transmission state of the connector based on a change in at least one of a voltage and a frequency of the fed back test signal.

The test signal may include an image signal, and the controller may determine the signal transmission state of the connector based on a change in at least one of a brightness level, a color level, and synchronization timing of the fed back test signal.

The test signal may include a digital signal, and the controller may determine the signal transmission state of the connector based on a change in a digital code of the fed back test signal.

The first terminal may include a signal reception terminal with respect to an external network, the second terminal may include a signal transmission terminal with respect to the external network, and the controller may determine the signal transmission state of the connector when the first terminal and the second terminal are connected to each other.

The first terminal and the second terminal may be electrically isolated from each other regardless of whether the plug is connected to the connector, and the first terminal and the second terminal may be connected to a connector configured to electrically connect the first terminal and the second terminal.

The image processing apparatus may further including a user input unit, and the controller may determine the signal transmission state of the connector when a signal ordering the controller to determine the signal transmission state of the connector is received from the user input unit.

According to an aspect of another exemplary embodiment, there is provided a control method of an image processing apparatus including a connector configure to connect to a plug of an external device and a signal processor configured to process a signal received by the connector, the control method including: determining whether a first terminal and a second terminal of the connector are electrically connected to each other; transmitting a test signal stored in the image processing apparatus to the first terminal and receiving the test signal fed back through the second terminal when the first terminal and the second terminal are electrically connected to each other; and determining a signal transmission state of the connector to the signal processor based on a change in signal characteristics of the received test signal.

The determining the signal transmission state of the connector may include displaying a determination result of the signal transmission state of the test signal.

The determining the signal transmission state of the connector may include comparing signal characteristic levels of the test signal stored in advance and the fed back test signal; and based on a result of the comparing, determining that the signal transmission state is normal when a level difference is within a preset range and determining that the signal transmission state is abnormal when the level difference is out of the preset range.

The signal characteristics may include at least one of a voltage, a frequency, synchronization timing, a brightness level, and a color level.

The test signal may include an analog signal, and the determining the signal transmission state of the connector may include determining the signal transmission state of the connector based on a change in at least one of a voltage and a frequency of the fed back test signal.

The test signal may include a digital signal, and the determining the signal transmission state of the connector may include determining the signal transmission state of the connector based on a change in a digital code of the fed back test signal.

The test signal may include an audio signal, and the determining the signal transmission state of the connector may include determining the signal transmission state of the connector based on a change in at least one of a voltage and a frequency of the fed back test signal.

The test signal may include an image signal, and the determining the signal transmission state of the connector may include determining the signal transmission state of the connector based on a change in at least one of a brightness level, a color level, and synchronization timing of the fed back test signal.

According to an aspect of another exemplary embodiment, there is provided an image processing apparatus including: a connector including a first terminal and a second terminal that are configured to be electrically connected in a testing mode; and a controller that transmits a first signal to the first terminal in the testing mode. The first signal is fed back to the controller from the second terminal as a second signal in the testing mode, and the controller compares the first signal and the second signal to determine a signal transmission state of the connector.

The image processing apparatus may further include a storage that stores the first signal. The controller may read the first signal from the storage in the testing mode.

The image processing apparatus may enter the testing mode when a connection member is coupled with the connector so as to electrically connect the first terminal and the second terminal.

The image processing apparatus may further comprise a switch controlled by the controller. The controller may control the switch to electrically connect the first terminal and the second terminal in the testing mode.

According to an aspect of the invention, there is provided an image processing apparatus as set out in claim 1. Preferred features are set out in claims 2 to 14.

According to an aspect of the invention, there is provided control method of an image processing apparatus as set out in claim 15.

The above and/or other aspects will become apparent and more readily appreciated from the following description of exemplary embodiments, taken in conjunction with the accompanying drawings, in which:
FIG. 1 illustrates an image processing apparatus according to a first exemplary embodiment.
FIG. 2 is a cross-sectional view illustrating a main part of an internal structure of one connector when the plug is not connected to the connector in the image processing apparatus of FIG. 1.
FIG. 3 is a cross-sectional view illustrating the main part of the internal structure of the connector when the plug is connected to the connector in the image processing apparatus of FIG. 1.
FIG. 4 is a block diagram illustrating a configuration of the image processing apparatus of FIG. 1.
FIG. 5 is a block diagram illustrating a structure of determining a signal transmission state between a connector and a signal processor in the image processing apparatus of FIG. 1.
FIG. 6 is a flowchart illustrating a method of determining a signal transmission state of one connector to the signal processor in the image processing apparatus of FIG. 1.
FIG. 7 is a block diagram illustrating a structure of determining a signal transmission state between a connector and a signal processor in an image processing apparatus according to a second exemplary embodiment.
FIG. 8 is a block diagram illustrating a structure of determining a signal transmission state between a connector and a signal processor in an image processing apparatus according to a third exemplary embodiment.

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity and conciseness, and like reference numerals refer to like elements throughout.

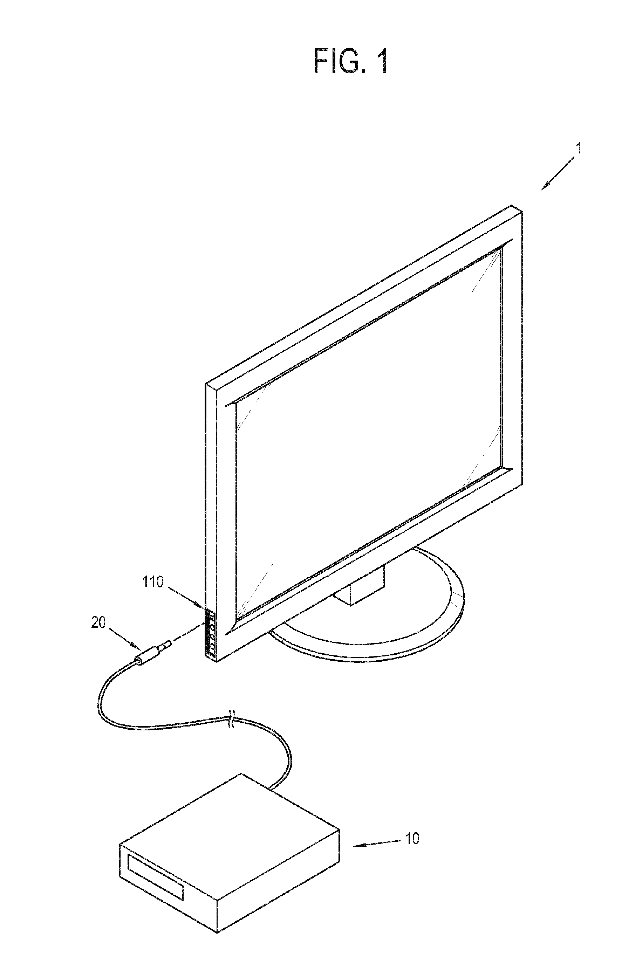

FIG. 1 illustrates an image processing apparatus 1 according to a first exemplary embodiment.

As shown in FIG. 1, the image processing apparatus 1 according to the present exemplary embodiment is configured as a TV which is capable of autonomously displaying an image. However, the image processing apparatus 1 may be configured as various display apparatuses, such as a monitor, a portable multimedia player, a projector, and a mobile phone, or any combination thereof, without being limited to the TV.

The image processing apparatus 1 receives various types of signals from an external device 10 locally connected to the image processing apparatus 1. For example, the image processing apparatus 1 receives an image signal or audio signal from the external device 10 and processes the signals to display an image or output a sound. Alternatively, the image processing apparatus 1 receives a signal including various types of information and processes the signal according to various preset processes.

Alternatively, the image processing apparatus 1 receives an analog signal or digital signal from the external device 10 and processes the signals in accordance with characteristics of the signals.

Signal transmission between the image processing apparatus 1 and the external device 10 may be achieved via a cable or wirelessly. According to the present exemplary embodiment, a wire plug 20 (hereafter referred to as 'plug'), which is electrically connected to the external device 10, is connected with a jack/connector 110 (hereafter referred to as 'connector') of the image processing apparatus 1, thereby enabling a signal from the external device 10 to be transmitted to the image processing apparatus 1.

At least one connector 110 is provided on an outside of the image processing apparatus 1. The connector 110 has a corresponding shape to the plug 20 and accommodates the plug 20 so that the plug 20 is electrically connected to the connector 110.

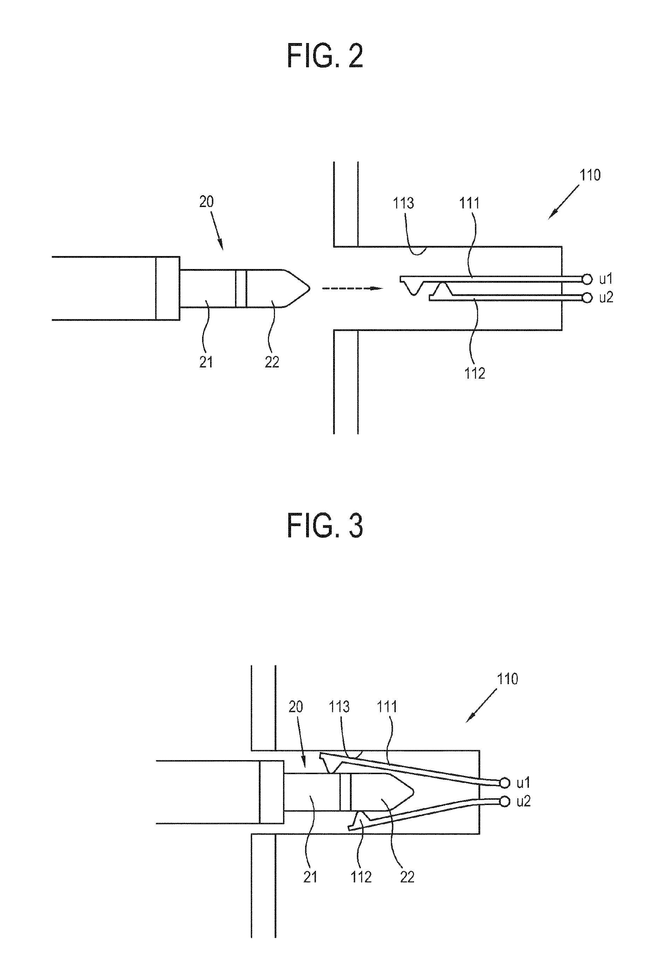

Now, a coupling structure of the connector 110 and the plug 20 will be described with reference to FIGS. 2 and 3. FIG. 2 is a cross-sectional view illustrating a main part of an internal structure of one connector 110 when the plug 20 is not connected to the connector 110, and FIG. 3 is a cross-sectional view illustrating the main part of the internal structure of the connector 110 when the plug 20 is connected to the connector 110.

As shown in FIG. 2, one connector 110 connected with one plug 20 includes an accommodation space 113 to accommodate the plug 20. Also, the connector 110 includes a first terminal 111 and a second terminal 112 installed in the accommodation space 113 and connecting to the plug 20.

The plug 20 includes a first electrode 21 and a second 22. The first electrode 21 and the second 22 are electrically isolated from each other. Further, the first electrode 21 and the second electrode 22 are connected via a wire to be electrically isolated from each other, while being connected to the external device 10. The first terminal 111 comes in contact with the first electrode 21, while the second terminal 112 comes in contact with the second electrode 22.

The first terminal 111 is connected to a first output terminal u1, and the second terminal 112 is connected to a second output terminal u2. The first terminal 111 and the second terminal 112 are provided as a conductive elastic body projecting to the accommodation space 113. While the plug 20 is not connected to the connector 110, the first terminal 111 and the second terminal 112 are in contact with each other, thus conducting electricity to each other.

Although the present exemplary embodiment is described with reference to a case where the connector 110 includes only two terminals 111 and 112, the connector 110 may include three or more terminals. For example, the plug 20 may include three electrodes, and the connector 110 may also include three terminals. In this case, while the plug 20 is not connected to the connector 110, two terminals, a first terminal 111 and a second terminal 112, are in contact with each other, and a third terminal (not shown) is not in contact with the first terminal 111 or the second terminal 112.

As shown in FIG. 3, as the plug 20 is connected to the connector 110, the first electrode 21 comes in contact with the first terminal 111 and the second electrode 22 comes in contact with the second terminal 112. Here, the plug 20 is disposed between the first terminal 111 and the second terminal 112, which are formed of the elastic body, moving the first terminal 111 and the second terminal 112 in separate directions.

That is, when the plug 20 is not connected to the connector 110, the first terminal 111 and the second terminal 112 are electrically connected to each other, so that the first output terminal u1 and the second terminal u2 are also electrically connected to each other. In contrast, when the plug 20 is connected to the connector 110, the first terminal 111 and the second terminal 112 are electrically isolated by the plug 20, so that the first output terminal u1 and the second output terminal u2 are also electrically isolated.

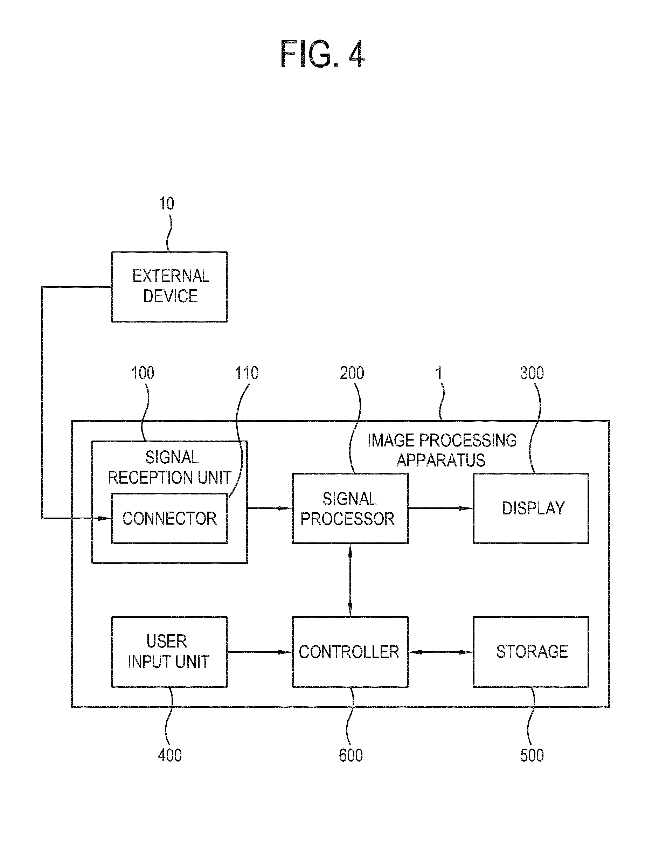

A configuration of the image processing apparatus 1 will now be described in detail with reference to FIG. 4.

As shown in FIG. 4, the image processing apparatus 1 includes a signal reception unit 100 that receives a signal from the external device 10, a signal processor 200 that processes the signal received by the signal reception unit 100 according to various preset processes, a display unit 300 that displays an image based on the signal processed by the signal processor 200 when the signal is an image signal, a user input unit 400 that outputs a preset command in accordance with a user's manipulation, a storage 500 that stores unlimited data/information, and a controller 600 that controls various operations of the image processing apparatus 1.

The signal reception unit 100 transmits the signal received from the external device 10 to the signal processor 200. The signal reception unit 100 may have various configurations based on characteristics and standards of received image signals, a configuration of the external device 10, and a configuration of the image processing apparatus 1. For example, the signal reception unit 100 may receive signals/data in accordance with high definition multimedia interface (HDMI), universal serial bus (USB), and component standards and include at least one connector 110 corresponding to each standard.

The signal reception unit 100 not only receives a signal from the external device 10 but may transmit information/data/a signal from the image processing apparatus 1 to the external device 10. That is, the signal reception unit 100 is not limited to a configuration of receiving a signal from the external device 10 but may also be configured to be an interface that enables bidirectional communication between the external device 10 and the image processing apparatus 1.

Further, although FIG. 4 shows the signal reception unit 100 including only a connector 110 for connection with the external device 10 via a cable, the signal reception unit 100 may further include various additional components, such as a wireless communication module (not shown) for wireless communications with the external device 10 and a tuner (not shown) for tuning of a broadcast signal, based on a design of the image processing apparatus 1.

The signal processor 200 performs a preset process on an image signal received by the signal reception unit 100 to process the signal. For example, when the signal received by the signal reception unit 100 is an image signal, the signal processor 200 processes the image signal according to an image processing process and outputs the image signal to the display 300, so that an image based on the image signal is displayed on the display 300.

The signal processor 200 may perform any type of image processing process, without being limited to, for example, demultiplexing to separate a signal into characteristic signals, decoding corresponding to an image format of an image signal, de-interlacing to convert an interlaced image signal into a progressive form, scaling to adjust an image signal to a preset resolution, noise reduction to improve image quality, detail enhancement, and frame refresh rate conversion.

Further, when a signal received by the signal reception unit 100 is an audio signal or data signal, the signal processor 200 performs an appropriate processing operation for each signal. Implementation of such processing operations by the signal processor 200 may be determined and applied based on characteristics of the signal received by the signal reception unit 100 when designing the image processing apparatus 1.

The signal processor 200 is configured as an image processing board (not shown) in which a circuit system to conduct such processes, such as a chip set (not shown), a memory (not shown), an electronic component (not shown) and wiring (not shown), is mounted on a Printed Circuit Board (PCB) (not shown).

The display 300 displays an image based on an image signal output from the signal processor 200. The display 300 may be configured in various display modes using liquid crystals, plasma, light emitting diodes, organic light emitting diodes, a surface conduction electron emitter, a carbon nano-tube, nano-crystals, or the like, without being limited thereto.

The display 300 may further include an additional element depending on a display mode thereof. For example, in a display mode using liquid crystals, the display 300 may include a liquid crystal display (LCD) panel, a backlight unit (not shown) providing light to the panel, and a panel drive board (not shown) driving the panel.

The user input unit 400 outputs various preset control commands or unlimited information by user's manipulation and input. The user input unit 400 may be provided as a menu key and an input panel installed on an outside of the image processing apparatus 1 or as a remote controller separate from the image processing apparatus 1.

Alternatively, the user input unit 400 may be configured as a single body with the display 300. That is, when the display 300 is a touch screen, a user may enable a preset command to be generated through an input menu (not shown) displayed on the display 300.

The storage 500 is configured as a nonvolatile memory, such as a flash memory and a hard disk drive, and stores various types of data. The storage 500 is accessed by the controller 600, which will be described, and the data stored in the storage 500 may be read/recorded/revised/deleted/updated by the controller 600.

With this configuration, when an image signal from the external device 10 is received by the signal reception unit 100, the signal processor 200 processes the image signal to display as an image on the display 300. Further, when an audio signal from the external device 10 is received by the signal reception unit 100, the signal processor 200 processes the audio signal and outputs the audio signal to a speaker (not shown). In this manner, the signal processor 200 processes a signal received by the signal reception unit 100 based on characteristics of the signal.

However, for example, when transmission failure occurs in a particular position while an image signal is transmitted from the external device 10 to the signal processor 200, a defective image may be displayed on the display 300. When the failure is due to the external device 10 itself or the wire plug 20 of the external device 10 connected to the connector 110, it is easy to identify a cause of the failure by replacing the corresponding component (e.g., the external device 10 or wire plug 20) with another that is known to work.

However, when the failure is due to a signal transmission structure between the connector 110 and the signal processor 200, for example, a condition of the connector 110 itself, or a signal wiring condition between the connector 110 and the signal processor 200, it is hard for an ordinary user to detect a cause of the failure. In the related art, since the user does not have knowledge about the structure of the image processing apparatus 1 in detail and is not equipped with an inspection device (not shown) to detect a problem in signal transmission, it is difficult for the user to determine a signal transmission state of the connector 110 to the signal processor 200. Thus, the image processing apparatus 1 according to the present exemplary embodiment employs the following structure and method for one connector 110 connected with one wire plug 20 connected to the external device 10 so as to determine a signal transmission state of the connector 110 to the signal processor 200 in a testing mode.

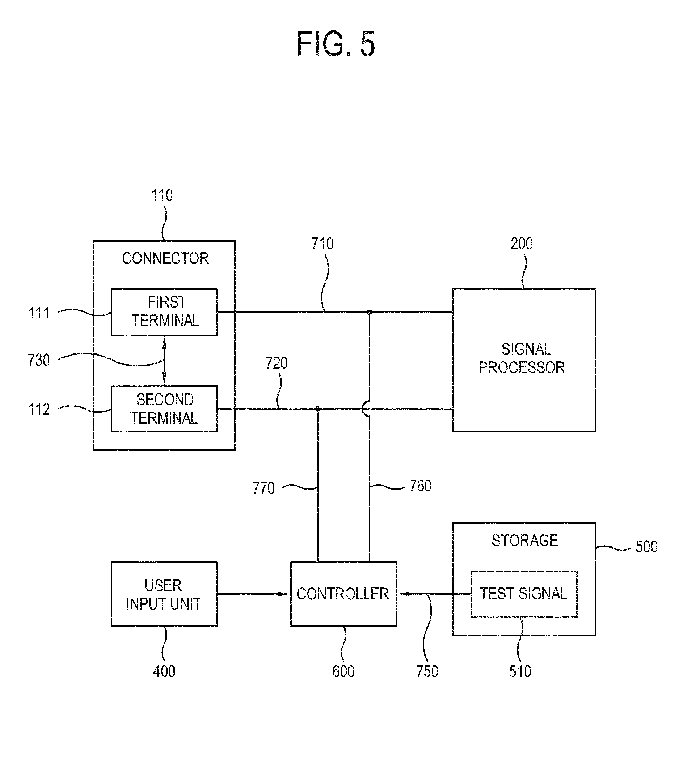

FIG. 5 is a block diagram illustrating that the controller 600 according to the present exemplary embodiment determines a signal transmission state between the connector 110 and the signal processor 200.

As shown in FIG. 5, the connector 110 includes the first terminal 111 and the second terminal 112. The first terminal 111 and the second terminal 112 are connected to the signal processor 200 via wires 710 and 720, respectively. When the plug 20 is connected to the connector 110, the first terminal 111 and the second terminal 112 are electrically isolated from each other and signals transmitted from the external device 10 to the first terminal 111 and the second terminal 112 are transmitted to the signal processor 200 through the wires 710 and 720, respectively.

On the contrary, when the plug 20 is not connected to the connector 110, the first terminal 111 and the second terminal 112 are electrically connected to each other via the connection 730, which has been described above with reference to FIGS. 2 and 3. When the first terminal 111 and the second terminal 112 are electrically connected to each other this may be considered to be the testing mode in this exemplary embodiment and others.

The storage 500 stores a preset test signal 510. The test signal 510 may be provided as various types or characteristics of signals and be set based on characteristics of the connector 110. When the connector 110 is configured to receive an audio signal, the test signal 510 is provided as an audio signal. Alternatively, when the connector 110 is configured to receive an image signal, the test signal 510 is provided as an image signal including preset image information.

With this configuration, when a control signal, which is transmitted from the user input unit 400 to the controller 600 and that orders an inspection of a signal transmission state of the connector 110, is received from the user input unit 400, the controller 600 determines whether the first terminal 111 and the second terminal 112 are electrically connected to each other via the connection 730.

Here, various determination methods may be used, for example, a method based on whether the plug 20 is connected to the connector 110. When it is detected that the plug 20 is connected to the connector 110, the controller 600 determines that the first terminal 111 and the second terminal 112 are electrically isolated from each other. When it is detected that the plug 20 is not connected to the connector 110, the controller 600 determines that the first terminal 111 and the second terminal 112 are electrically connected to each other.

Also, various methods may be used to detect whether the plug 20 is connected to the connector 110. For example, it is determined that the plug 20 is connected to the connector 110 when a particular signal is received from the external device 10 through the first terminal 111. It is determined that the plug 20 is not connected to the connector 110 when a particular signal is not received from the external device 10 through the first terminal 111. However, such a method is provided for illustrative purposes only and do not limit the present exemplary embodiment.

When it is determined that the first terminal 111 and the second terminal 112 are electrically connected to each other via the connection 730, the controller 600 reads the test signal 510 from the storage 500 via the wire 750. Since the test signal 510 is stored as digital data in the storage 500, the controller 600 may generate a test signal 510 of an analog signal based on the digital data or use the digital data as it is as the test signal 510.

The controller 600 transmits the read test signal 510 to the first terminal 111 via the wires 760 and 710. Since the first terminal 111 and the second terminal 112 are electrically connected to each other via the connection 730, the test signal 510 transmitted to the first terminal 111 is fed back into the controller 600 via the second terminal 112 via the wires 720 and 770.

Then, the controller 600 determines whether there is a change in signal characteristics between when the test signal 510 is read from the storage 500 and when the test signal 510 is fed back from the connector 110 to the controller 600. Specifically, the test signal 510, which is stored in the storage 500 before it is transmitted by the controller 600 to the first terminal 111, is defined as having a first state. The test signal 510, which is fed back from the second terminal 112 to the controller 600, is defined as having a second state. The controller 600 compares quantified signal characteristic levels of the test signal 510 in the first state and second state. The controller 600 determines whether the signal transmission state is normal or abnormal based on a difference obtained from a comparison of the first state and the second state.

For example, when the test signal 510 has analog characteristics, the controller 600 detects a voltage or frequency difference of the test signal 510 between the first state and the second state. The controller 600 determines that the signal transmission state is normal when the detected difference is within a preset range, and determines that the signal transmission state is abnormal when the detected difference is out of the preset range.

Alternatively, when the test signal 510 is an audio signal of analog characteristics, the controller 600 detects a voltage or frequency difference of the test signal 510 between the first state and the second state. The controller 600 determines that the signal transmission state is normal when the detected difference is within a preset range, and determines that the signal transmission state is abnormal when the detected difference is out of the preset range.

Alternatively, when the test signal 510 is an image signal, the controller 600 detects a difference in at least one of a brightness level, a color level and synchronization timing of the test signal 510 between the first state and the second state. The controller 600 determines that the signal transmission state is normal when the detected difference between the first state and the second state is within a preset range, and determines that the signal transmission state is abnormal when the detected difference between the first state and the second state is out of the preset range.

Alternatively, when the test signal 510 has digital characteristics, the controller 600 detects that there is a change in a digital code of the test signal 510 between the first state and the second state. The controller 600 determines that the signal transmission state is normal when there is no change in the digital code or the number of changed digital codes is within an acceptable range. Further, the controller 600 determines that the signal transmission state is abnormal when the number of changed digital codes is out of the acceptable range.

In this way, the controller 600 determines whether the signal transmission state between the connector 110 and the signal processor 200 or the signal transmission state of the connector 110 to the signal processor 200 is normal or abnormal. The controller 600 informs a user of a determination result by displaying the result on the display 300.

As such, according to the present exemplary embodiment, the controller 600 transmits the test signal 510 stored in the storage 500 to the first terminal 111 and determines the signal transmission state of the connector 110 to the signal processor 200 based on whether there is a change in preset signal characteristics of the test signal 510 fed back through the second terminal 112. The controller 600 displays the determination result on the display 300, thereby ensuring that the user can easily determine the signal transmission state in the image processing apparatus 1 by self-diagnosis of the image processing apparatus 1.

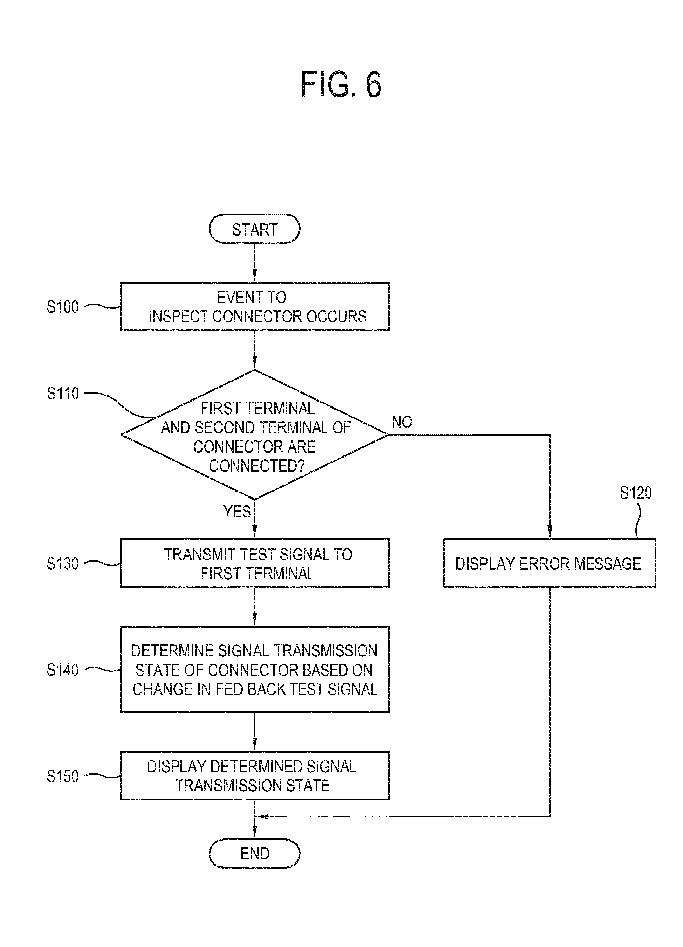

A method of inspecting a signal transmission state of any one connector 110 to the signal processor 200 in the image processing apparatus 1 according to the present exemplary embodiment will now be described with reference to FIG. 6. FIG. 6 is a flowchart illustrating the method.

As shown in FIG. 6, when an event ordering an inspection of the connector 110 occurs (S100), the controller 600 determines whether the first terminal 111 and the second terminal 112 of the connector 110 are electrically connected to each other (S110).

When the first terminal 111 and the second terminal 112 are not electrically connected to each other (S110 - No), the controller 600 does not inspect the connector 110 but displays an error message (S120) and the process ends.

When the first terminal 111 and the second terminal 112 are electrically connected to each other (S110 - Yes), the controller 600 transmits a test signal 510 stored in advance to the first terminal 111 (S130). When the test signal 510 is fed back from the second terminal 112, the controller 600 determines a signal transmission state of the connector 110 based on a change in the fed back test signal 510 (S140).

The controller 600 displays the determined signal transmission state (S150) and the process ends.

In this way, the signal transmission state of the connector 110 to the signal processor 200 may be determined and inspected.

In the first exemplary embodiment described with reference FIGS. 2 and 3, electrical connection between the first terminal 111 and the second terminal 112 changes depending on whether the plug 20 is connected or connected to the connector 110.

However, it is possible that the first terminal and the second terminal are always electrically isolated from each other depending on a connector type or standard, regardless of whether the plug is connected or not. For example, when the plug is an Local Area Network (LAN) cable for connection with an external network, the first terminal of the connector is a signal reception terminal with respect to the external network, and the second terminal of the connector is a signal transmission terminal with respect to the external network, thus the first terminal and the second terminal are always electrically isolated from each other according to well-known standards.

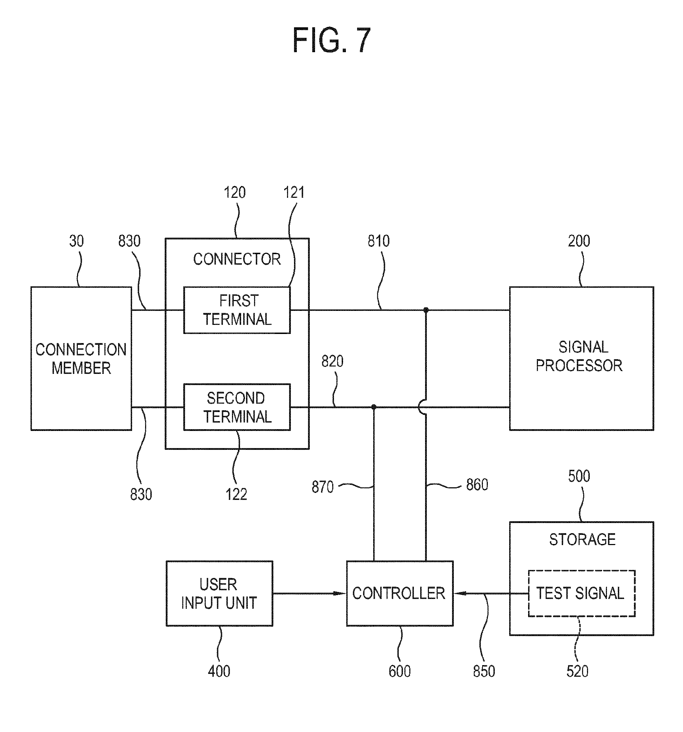

A structure for determining a signal transmission state of a connector with the foregoing configuration according to a second exemplary embodiment will now be described. FIG. 7 is a block diagram illustrating that a controller 600 determines a signal transmission state between a connector 120 and a signal processor 200 according to the second exemplary embodiment.

As shown in FIG. 7, the connector 120 includes a first terminal 121 and a second terminal 122. The first terminal 121 and the second terminal 122 are connected to the signal processor 200 via wires 810 and 820, respectively. The first terminal 121 and the second terminal 122 are always electrically isolated from each other regardless of whether a plug (not shown) is connected with the connector 120.

A storage 500 stores a preset test signal 520. In the present exemplary embodiment, the test signal 520 is stored in the storage 500, but the controller 600 may generate the test signal 520 according to a preset algorithm. When the connector 120 is an LAN interface for connection to an external network, the controller 600 may generate a data packet including preset information as the test signal 520.

In order to inspect a signal transmission state of the connector 120, a user connects a connection member 30 to the connector 120. The connection member 30 electrically connects the first terminal 121 and the second terminal 122 when connected with the connector 120, and a shape and structure thereof are not particularly limited.

When the first terminal 121 and the second terminal 122 are electrically connected by the connection member 30 via a connection 830 and a control signal, which is output from the user input unit 400 to the controller 600 and that orders an inspection of the signal transmission state of the connector 120, is received from a user input unit 400, the controller 600 reads the test signal 520 from the storage 500 via the wire 850. The controller 600 transmits the read test signal 520 to the first terminal 121 via the wires 860 and 810.

When the test signal 520 is fed back from the second terminal 122 via the wires 820 and 870, the controller 600 determines whether there is a change in signal characteristics between when the test signal 520 is read from the storage 500 and when the test signal 520 is fed back from the connector 120 to the controller 600. A method of determining and inspecting the signal transmission state of the connector based on a change in signal characteristics of the test signal is substantially the same as in the first exemplary embodiment, and thus description thereof will be omitted.

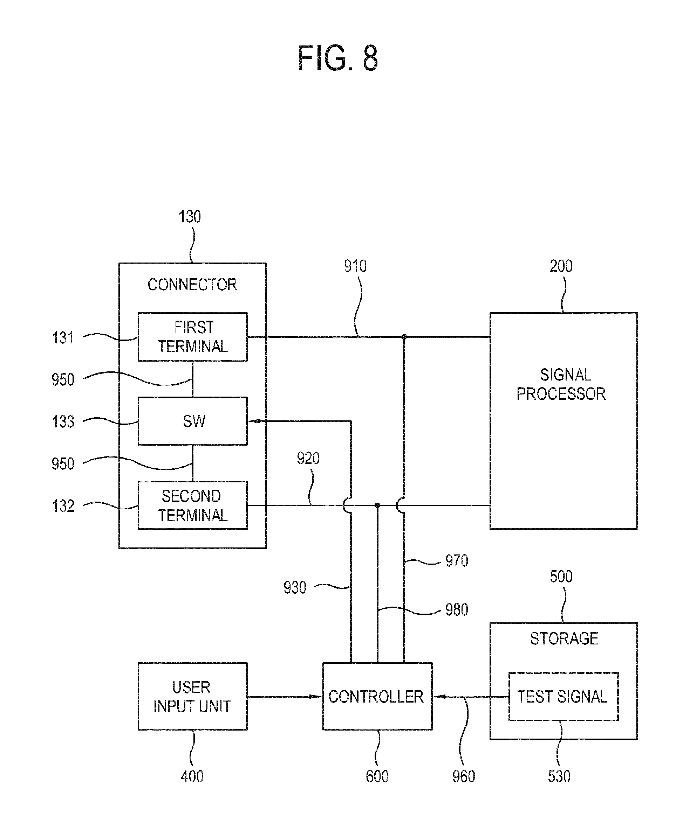

Although the second exemplary embodiment has been described with reference to a case where the connection member 30 is connected to the connector 120 for electrical conduction/connection of the first terminal 121 and the second terminal 122, the connection member 30 according to some exemplary embodiments, is not required to be used. Now, a structure for determining a signal transmission state of a connector without an additional connection member 30 according to a third exemplary embodiment will be described. FIG. 8 is a block diagram illustrating that a controller 600 determines a signal transmission state between a connector 130 and a signal processor 200 according to the third exemplary embodiment.

As shown in FIG. 8, the connector 130 includes a first terminal 131 and a second terminal 132. The first terminal 131 and the second terminal 132 are connected to the signal processor 200 via wires 910 and 920, respectively.

A switch 133 switching to selectively allow or block electrical conduction between the first terminal 131 and the second terminal 132 is installed between the first terminal 131 and the second terminal 132, and the controller 600 controls switching of the switch 133 via the wire 930.

When a control signal, which is output from the user input unit to the controller 600 and that orders an inspection of the signal transmission state of the connector 130, is received from a user input unit 400, the controller 600 controls the switch 133 to electrically connect the first terminal 131 and the second terminal 132 via the connection 950. The controller 600 reads the test signal 530 from a storage 500 via a wire 960 and transmits the read test signal 530 to the first terminal 131 via wires 970 and 910.

When the test signal 530 is fed back from the second terminal 132 via wires 920 and 980, the controller 600 determines whether there is a change in signal characteristics between when the test signal 530 is read from the storage 500 and when the test signal 530 is fed back from the connector 130 to the controller 600. A method of determining and inspecting the signal transmission state of the connector based on a change in signal characteristics of the test signal is substantially the same as in the first exemplary embodiment, and thus description thereof will be omitted.

Of course, when a plug (not shown) is connected to the connector 130, the controller 600 detects connection of the plug and controls the switch 133 so that the first terminal 131 and the second terminal 132 are electrically isolated from each other.

As discussed above, embodiments provide an image processing apparatus comprising: a signal reception unit comprising a connector connectable to a plug of an external device and arranged to receive a signal from the external device through a plug connected to the connector; a signal processor arranged to process the signal received by the signal reception unit according to a preset process; a storage arranged to store a preset test signal; and a controller arranged to transmit the test signal stored in the storage to a first terminal when the first terminal and a second terminal comprised in the connector are electrically connected to each other, and to determine a signal transmission state of the connector to the signal processor based on a change in preset signal characteristics of the test signal fed back through the second terminal.

The foregoing exemplary embodiments have been described with reference to a case where the image processing apparatus displays an inspection result on its own display. However, when the image processing apparatus does not include a display, the image processing apparatus transmits an inspection result to a display apparatus, thereby displaying the result on the display apparatus.

Although a few exemplary embodiments have been shown and described, it will be appreciated by those skilled in the art that changes may be made in these exemplary embodiments without departing from the principles of the inventive concept, the scope of which is defined in the appended claims and their equivalents.

## Claims

1. An image processing apparatus comprising:
a signal reception unit comprising a connector connectable to a plug of an external device and arranged to receive a signal from the external device through a plug connected to the connector;
a signal processor arranged to process the signal received by the signal reception unit according to a preset process;
a storage arranged to store a preset test signal; and
a controller arranged to transmit the test signal stored in the storage to a first terminal when the first terminal and a second terminal comprised in the connector are electrically connected to each other, and to determine a signal transmission state of the connector to the signal processor based on a change in preset signal characteristics of the test signal fed back through the second terminal.

2. The image processing apparatus of claim 1, wherein the controller is arranged to transmit a determination result of the signal transmission state of the test signal to be displayed on a display.

3. The image processing apparatus of claim 2, further comprising the display.

4. The image processing apparatus of claim 2, wherein the image processing apparatus is connectable to a display apparatus comprising the display, and the controller is arranged to transmit the determination result of the signal transmission state of the test signal to the display apparatus.

5. The image processing apparatus of any one of claims 1 to 4, wherein the controller is arranged to compare signal characteristic levels of the test signal stored in the storage and the fed back test signal, to determine that the signal transmission state is normal when a level difference is within a preset range, and to determine that the signal transmission state is abnormal when the level difference is out of the preset range.

6. The image processing apparatus of claim 5, wherein the signal characteristics comprise at least one of a voltage, a frequency, synchronization timing, a brightness level, and a color level.

7. The image processing apparatus of any one of claims 1 to 6, wherein the first terminal and the second terminal are configured to be electrically isolated from each other when the plug is connected to the connector, and are configured to be electrically connected to each other when the plug is not connected to the connector, and the controller is arranged to determine the signal transmission state of the connector when the plug is not connected to the connector.

8. The image processing apparatus of claim 7, wherein the test signal comprises an analog signal, and the controller is arranged to determine the signal transmission state of the connector based on a change in at least one of a voltage and a frequency of the fed back test signal.

9. The image processing apparatus of claim 7 or 8, wherein the connector is arranged to receive an audio signal, and the controller is arranged to determine the signal transmission state of the connector based on a change in at least one of a voltage and a frequency of the fed back test signal.

10. The image processing apparatus of claim 7, wherein the test signal comprises an image signal, and the controller is arranged to determine the signal transmission state of the connector based on a change in at least one of a brightness level, a color level, and synchronization timing of the fed back test signal.

11. The image processing apparatus of claim 7, wherein the test signal comprises a digital signal, and the controller is arranged to determine the signal transmission state of the connector based on a change in a digital code of the fed back test signal.

12. The image processing apparatus of any one of claims 1 to 6, wherein the first terminal comprises a signal reception terminal with respect to an external network, the second terminal comprises a signal transmission terminal with respect to the external network, and the controller determines the signal transmission state of the connector when the first terminal and the second terminal are connected to each other.

13. The image processing apparatus of claim 12, wherein the first terminal and the second terminal are electrically isolated from each other regardless of whether the plug is connected to the connector, and the first terminal and the second terminal are electrically connected when a connection member is connected to the connector.

14. The image processing apparatus of any one of claims 1 to 13, further comprising a user input unit, wherein the controller is arranged to determine the signal transmission state of the connector when a signal ordering the controller to determine the signal transmission state of the connector is received from the user input unit.

15. A control method of an image processing apparatus comprising any one connector connected to a plug of an external device and a signal processor processing a signal received by the connector, the control method comprising:
determining whether a first terminal and a second terminal of the connector are electrically connected to each other;
transmitting a test signal stored in advance to the first terminal and receiving the test signal fed back through the second terminal when the first terminal and the second terminal are electrically connected to each other; and
determining a signal transmission state of the connector to the signal processor based on a change in preset signal characteristics of the received test signal.
